# EUROPEAN PATENT APPLICATION

(11) **EP 3 434 570 A1**
(43) Date of publication of application: **30.01.2019**
(21) Application number: 18185168.4
(22) Date of filing: 24.07.2018
(51) Int. Cl.: B62K 5/08, B62K 5/10

(54) **VEHICLE HAVING ANTI-TILT LOCKING FUNCTION**

(30) Priority: 27.07.2017 TW 106125210
(71) Applicant: Kwang Yang Motor Co., Ltd., Kaohsiung City 807 (TW)
(72) Inventor: TING, Hsin-Chih, 807 Kaohsiung (TW); LEE, Yen-Hsiu, 813 Kaohsiung City (TW); HUANG, Bi-Song, 802 Kaohsiung City (TW)
(74) Representative: Wynne-Jones IP Limited

(57) **Abstract**

A vehicle includes left and right front wheels (31, 32), a supporting member (41), a tilting unit (5), a locking unit (6) and an actuating unit (7) . The locking unit (6) includes left and right hydraulic oil cylinders (61, 62) respectively located at left and right sides of the supporting member (41) . Each of the left and right hydraulic oil cylinders (61, 62) has a first end (611, 621) pivotally connected to the supporting member (41), and a second end (612, 622) pivotally connected to the tilting unit (5). The actuating unit (7) is operable for converting the locking unit (6) between an unlocking state, where the tilting unit (5) is operable to be tilted, and a locking state, where the tilting unit (5) is prevented from being tilted.

## Description

The disclosure relates to a vehicle, and more particularly to a vehicle having anti-tilt locking function.

Conventionally, a motorcycle typically includes a rear wheel, and a front wheel that is aligned with the rear wheel in a front-rear direction. This configuration is highly operable, but lacks stability, and is not suitable for older riders or riders with poor balance.

Three-wheeled motorcycles have been developed in order to provide better stability when riding. Referring to FIG. 1, a first conventional motorcycle according to European Patent Application Publication No. EP 1561612 A1 includes two front wheels 10, and a quadrilateral steering mechanism 11 for simultaneously turning the front wheels 10 in the same direction. The conventional motorcycle further includes a brake disc 12, a locking element 13, and a motor 14, which is operable to actuate the locking element 13 to lock the brake disc 12, thereby locking the quadrilateral steering mechanism 11 when needed. However, since the brake disc 12 is connected to the quadrilateral steering mechanism 11 in such a manner that operation of the quadrilateral steering mechanism 11 results in rotation of the brake disc 12, a reserve space is needed for rotation of the brake disc 12. Moreover, the size of the brake disc 12 and the locking element 13, and the output power of the motor 14 need to be increased for providing greater locking force, thereby increasing the manufacturing costs and the reserve space.

Referring to FIG. 2, a second conventional motorcycle according to German Patent Application Publication No. DE 10210252716 A1 includes a main frame 21 that includes a hollow lateral bar 211, a steering unit 22 that is connected to the hollow lateral bar 211 and that includes a hydraulic locking mechanism 251, and two front wheels 232 that are connected to the steering unit 22. The hydraulic locking mechanism 251 is operable to lock the steering unit 22 to prevent the steering unit 22 from inclining relative to the hollow lateral bar 211. However, the hydraulic locking mechanism 251 is a hydraulic cylinder positioned at one side of the main frame 21, which deteriorates stability of the second conventional motorcycle.

Therefore, an object of the disclosure is to provide a vehicle that can alleviate at least one of the drawbacks of the prior art.

According to a first aspect of the present disclosure, a first vehicle includes a frame unit, a tilting unit, a left front wheel and a right front wheel. The frame unit includes a supporting member at a front side thereof. The tilting unit includes an upper connecting member, a lower connecting member, a left tube and a right tube. The upper connecting member has a first middle portion that is pivotally connected to the supporting member, a first left end that is disposed at a left end thereof, and a first right end that is disposed at a right end thereof. The lower connecting member is located under the upper connecting member, and has a second middle portion that is pivotally connected to the supporting member, a second left end that is disposed at a left end thereof, and a second right end that is disposed at a right end thereof. The left tube is pivotally connected to the first left end of the upper connecting member and the second left end of the lower connecting member. The right tube is pivotally connected to the first right end of the upper connecting member and the second right end of the lower connecting member. The left front wheel is rotatably connected to the left tube. The right front wheel is rotatably connected to the right tube.

The first vehicle further includes a locking unit and an actuating unit. The locking unit includes a left hydraulic oil cylinder and a right hydraulic oil cylinder that are respectively located at left and right sides of the supporting member. The left hydraulic oil cylinder has a first end that is pivotally connected to the supporting member, and a second end that is opposite to the first end and that is pivotally connected to the tilting unit. The right hydraulic oil cylinder has a first end that is pivotally connected to the supporting member, and a second end that is opposite to the first end and that is pivotally connected to the tilting unit. The actuating unit is operable for converting the locking unit between an unlocking state, where the tilting unit is operable to tilt relative to the supporting member, and a locking state, where the tilting unit is prevented from tilting relative to the supporting member.

According to a second aspect of the present disclosure, a second vehicle includes a frame unit, a tilting unit, a left front wheel and a right front wheel. The frame unit includes a supporting member at a front side thereof. The supporting member includes a fixed rod. The tilting unit includes an upper connecting member, a lower connecting member, a left tube and a right tube. The upper connecting member has a first middle portion that is pivotally connected to the supporting member, a first left end that is disposed at a left end thereof, and a first right end that is disposed at a right end thereof. The lower connecting member is located under the upper connecting member, and has a second middle portion that is pivotally connected to the supporting member, a second left end that is disposed at a left end thereof, and a second right end that is disposed at a right end thereof. The left tube is pivotally connected to the first left end of the upper connecting member and the second left end of the lower connecting member. The right tube is pivotally connected to the first right end of the upper connecting member and the second right end of the lower connecting member. The left front wheel is rotatably connected to the left tube. The right front wheel is rotatably connected to the right tube.

The second vehicle further includes a locking unit and an actuating unit. The locking unit includes a left hydraulic oil cylinder and a right hydraulic oil cylinder that are respectively located at left and right sides of the supporting member. The left hydraulic oil cylinder has a first end that abuts against the fixed rod of the supporting member, and a second end that is opposite to the first end and that is connected to the tilting unit. The right hydraulic oil cylinder has a first end that abuts against the fixed rod of the supporting member, and a second end that is opposite to the first end and that is connected to the tilting unit. The actuating unit is operable for converting the locking unit between an unlocking state, where the tilting unit is operable to tilt relative to the supporting member, and a locking state, where the tilting unit is prevented from tilting relative to the supporting member.

Other features and advantages of the disclosure will become apparent in the following detailed description of the embodiments with reference to the accompanying drawings, of which:

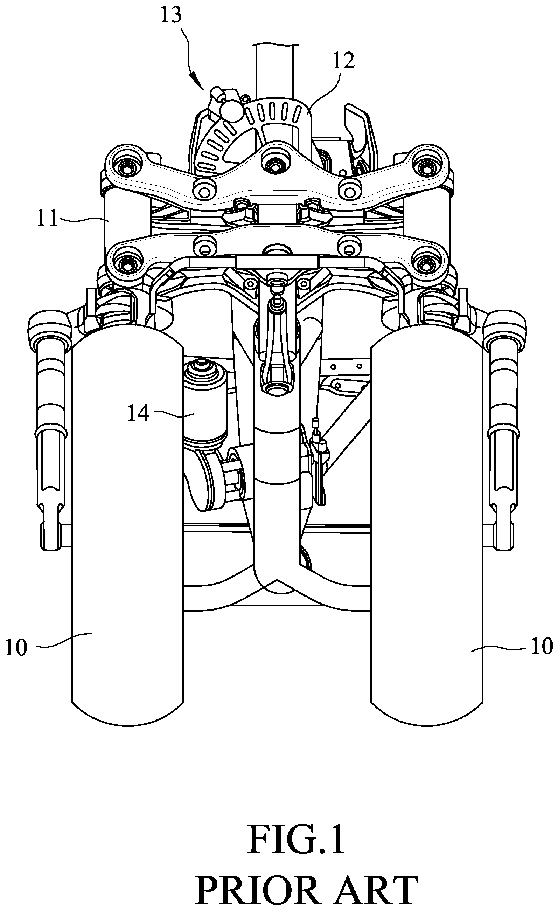

FIG. 1 is a fragmentary front view of a conventional motorcycle according to European Patent Application Publication No. EP 1561612 A1;

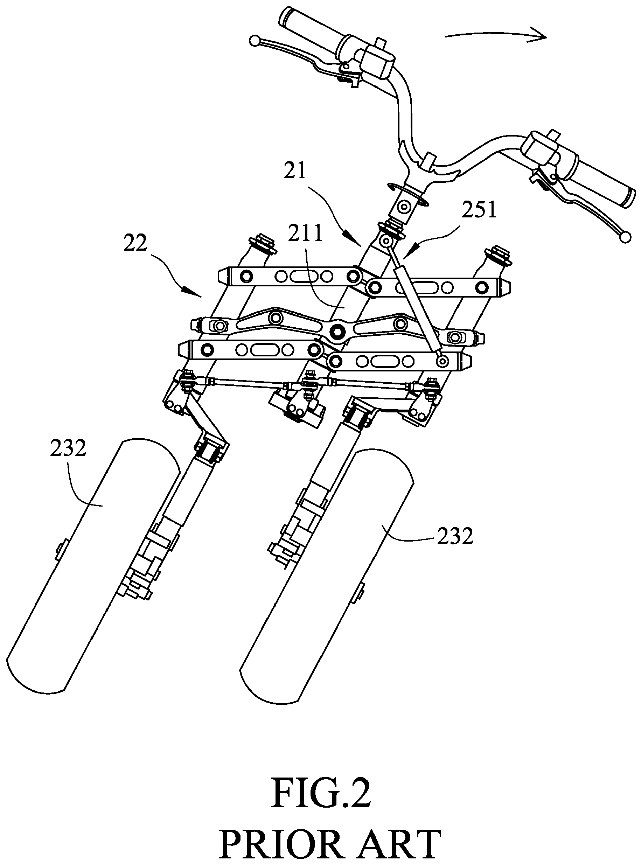

FIG. 2 is a schematic front view of another conventional motorcycle according to German Patent Application Publication No. DE 10210252716 A1;
FIG. 3 is a schematic fragmentary front view of a first embodiment of a vehicle according to the present disclosure;
FIG. 4 is a fragmentary, partially exploded perspective view of the first embodiment;
FIG. 5 is a schematic fragmentary front view of the first embodiment, showing a tilting unit of the first embodiment being tilted;
FIG. 6 is a schematic view showing a locking unit of the first embodiment being in a locking state;
FIG. 7 is a schematic view showing the locking unit of the first embodiment being in an unlocking state;
FIG. 8 is a schematic fragmentary front view of a second embodiment of the vehicle according to the present disclosure;
FIG. 9 is a fragmentary, partially exploded view of the second embodiment;
FIG. 10 is a schematic fragmentary front view of the second embodiment, showing the tilting unit of the second embodiment being tilted;
FIG. 11 is a schematic view showing the locking unit of the second embodiment being in the locking state; and
FIG. 12 is a schematic view showing the locking unit of the second embodiment being in the unlocking state.

Before the disclosure is described in greater detail, it should be noted that where considered appropriate, reference numerals or terminal portions of reference numerals have been repeated among the figures to indicate corresponding or analogous elements, which may optionally have similar characteristics.

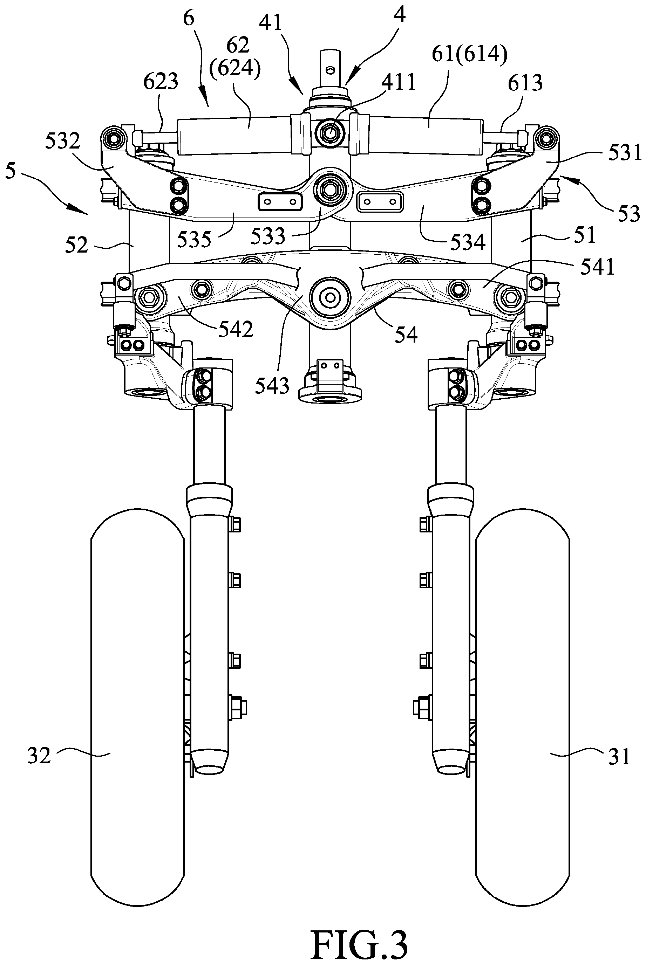

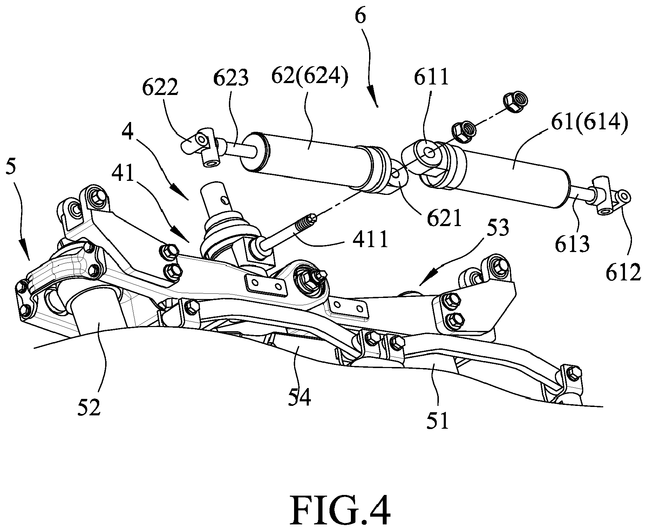

Referring to FIGS. 3, 4 and 6, a first embodiment of a vehicle according to the present disclosure is a three-wheeled vehicle, and includes a left front wheel 31, a right front wheel 32, a rear wheel (not shown), a frame unit 4, a tilting unit 5, a locking unit 6, an actuating unit 7 and a handlebar (not shown).

The frame unit 4 includes a supporting member 41 at a front side thereof. The supporting member 41 includes a fixed rod 411 horizontally disposed at a front side thereof and extends in a front-rear direction.

The tilting unit 5 includes a left tube 51, a right tube 52, an upper connecting member 53 and a lower connecting member 54. The upper connecting member 53 has a first middle portion 533 that is pivotally connected to the supporting member 41, a first left end 531 that is disposed at a left end thereof, and a first right end 532 that is disposed at a right end thereof. The lower connecting member 54 is located under the upper connecting member 53, and has a second middle portion 531 that is pivotally connected to the supporting member 41, a second left end 541 that is disposed at a left end thereof, and a second right end 542 that is disposed at a right end thereof. The left tube 51 is pivotally connected to the first left end 531 of the upper connecting member 53 and the second left end 541 of the lower connecting member 54. The right tube 52 is pivotally connected to the first end 532 of the upper connecting member 53 and the second right end 542 of the lower connecting member 54. The left front wheel 31 is rotatably connected to the left tube 51. The right front wheel 32 is rotatably connected to the right tube 52. The rear wheel is rotatably connected to a rear end of the frame unit 4. In this embodiment, the upper connecting member 53 of the tilting unit 5 includes an upper left connecting rod 534 having the first left end 531, and an upper right connecting rod 535 having the first right end 532. The upper left and right connecting rods 534, 535 are pivotally connected to the supporting member 41 at the first middle portion 533, and are rotatable about the same axis.

Referring to FIGS. 3, 4, 6 and 7, the locking unit 6 includes a left hydraulic oil cylinder 61, a right hydraulic oil cylinder 62, an oil circuit 63 and a control valve 64. The left and right hydraulic oil cylinders 61, 62 are respectively located at left and right sides of the supporting member 41. In this embodiment, the left and right hydraulic oil cylinders 61, 62 are symmetrically disposed relative to the supporting member 41, and are respectively located above the upper left and right connecting rods 534, 535. In this embodiment, the left hydraulic oil cylinder 61 includes a left cylinder body 614 that has a first end 611 pivotally connected to the fixed rod 411 of the supporting member 41, and a left cylinder rod 613 that retractably extends from the left cylinder body 614 and that has a second end 612 opposite to the first end 611 and pivotally connected to the upper connecting member 53 of the tilting unit 5. The right hydraulic oil cylinder 62 includes a right cylinder body 624 that has a first end 621 pivotally connected to the fixed rod 411 of the supporting member 41, and a right cylinder rod 623 that retractably extends from the right cylinder body 624 and that has a second end 622 opposite to the first end 621 and pivotally connected to the upper connecting member 53 of the tilting unit 5. Since both of the first end 611 of the left hydraulic oil cylinder 61 and the first end 621 of the right hydraulic oil cylinder 62 are pivotally connected to the fixed rod 411 of the supporting member 41, the left and right hydraulic oil cylinders 61, 62 are rotatable about the same axis. The abovementioned configuration of the locking unit 6 possesses a compact design, and is less likely to interfere with other components.

Therefore, one of the effects of this disclosure resides in the symmetrical configuration of the left and right hydraulic oil cylinders 61, 62, which offers more stability to the vehicle. The pivotal connection between the left and right hydraulic oil cylinders 61, 62 and the supporting member 41 provides uniform force distribution during tilting of the vehicle, which also provides more stability to the vehicle.

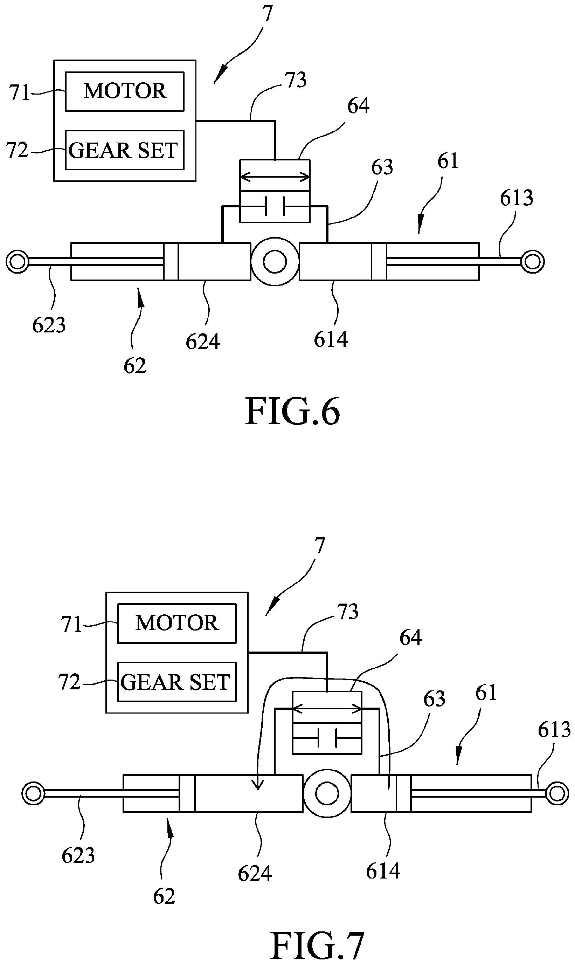

The actuating unit 7 is connected to the locking unit 6, and is operable for converting the locking unit 6 between an unlocking state (see FIG. 7), where the tilting unit 5 is operable to tilt relative to the supporting member 41, and a locking state (see FIG. 6), where the tilting unit 5 is prevented from tilting relative to the supporting member 41.

In this embodiment, the oil circuit 63 is connected between the left and right hydraulic oil cylinders 61, 62 such that hydraulic oil is permitted to flow therebetween. The control valve 64 is connected to the oil circuit 63 and is operable to allow flow of the hydraulic oil in the oil circuit 63 and the left and right hydraulic oil cylinders 61, 62 such that the locking unit 6 is in the unlocking state, and is operable to prevent flow of the hydraulic oil in the oil circuit 63 and the left and right hydraulic oil cylinders 61, 62 such that the locking unit 6 is in the locking state. The actuating unit 7 includes a motor 71, a gear set 72 that is connected to the motor 71, and a transmitting line 73 that is a conductive wire and that is connected between the gear set 72 and the control valve 64. The motor 71 is operable to drive the gear set 72 such that the control valve 64 is driven by the gear set 72 through the transmitting line 73 to allow or prevent passage of the hydraulic oil through the control valve 64. Alternatively, the transmitting line 73 may be an oil circuit. With the abovementioned configuration, driving force can be effectively provided to control the control valve 64, thereby eliminating the need for the motor 71 with larger power or larger gear set 72, and thereby achieving miniaturization of the locking unit 6 and the actuating unit 7.

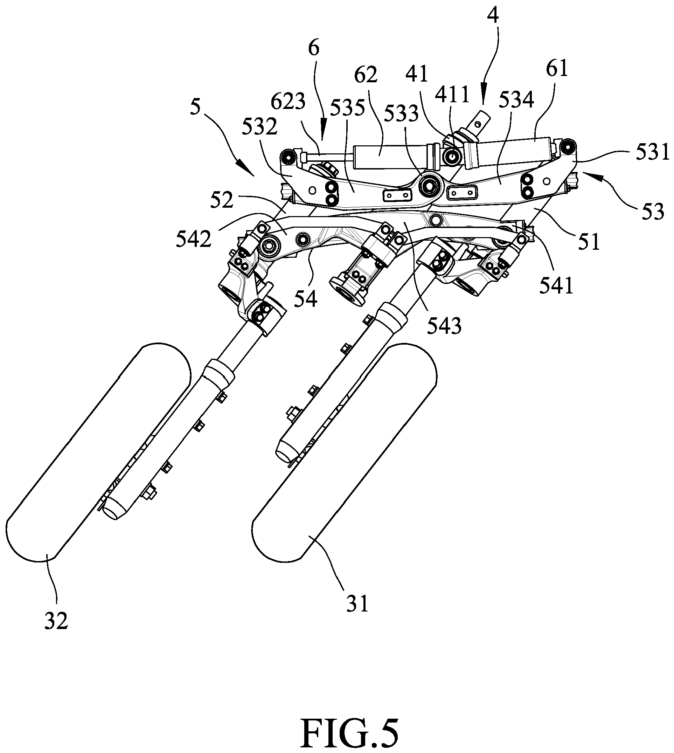

Referring to FIGS. 5 and 7, in this embodiment, a switch (not shown) that may be mounted to the handlebar can be operated by a rider to convert the locking unit 6 from the locking state into the unlocking state, allowing the rider to steer the vehicle by tilting the tilting unit 5 through operation of the handlebar. In FIG. 5, the vehicle is shown to steer toward the left, in which a part of the left cylinder rod 613 retracts into the left cylinder body 614, a part of the right cylinder rod 623 extends out of the right cylinder body 624, and a part of the hydraulic oil is extruded from the left cylinder body 614 into the right cylinder body 624 due to the incompressibility of the hydraulic oil. Referring to FIGS. 3 and 6, when steering of the vehicle is not desired, the positions of the left and right cylinder rods 613, 623 are symmetrical with respect to the supporting member 41. The rider may operate the switch to convert the locking unit 6 from the unlocking state into the locking state. Since the hydraulic oil is incompressible and is prevented from flowing out of each of the left and right hydraulic oil cylinders 61, 62 when the locking unit 6 is in the locking state, the tilting unit 5 is prevented from inclining because the upper connecting member 53 of the tilting unit 5 is connected to the left and right cylinder rods 613, 623. It is worth mentioning that, if necessary, it may be designed such that, when the tilting unit 5 is slightly tilted, the rider may still be able to operate the switch to convert the locking unit 6 into the locking state.

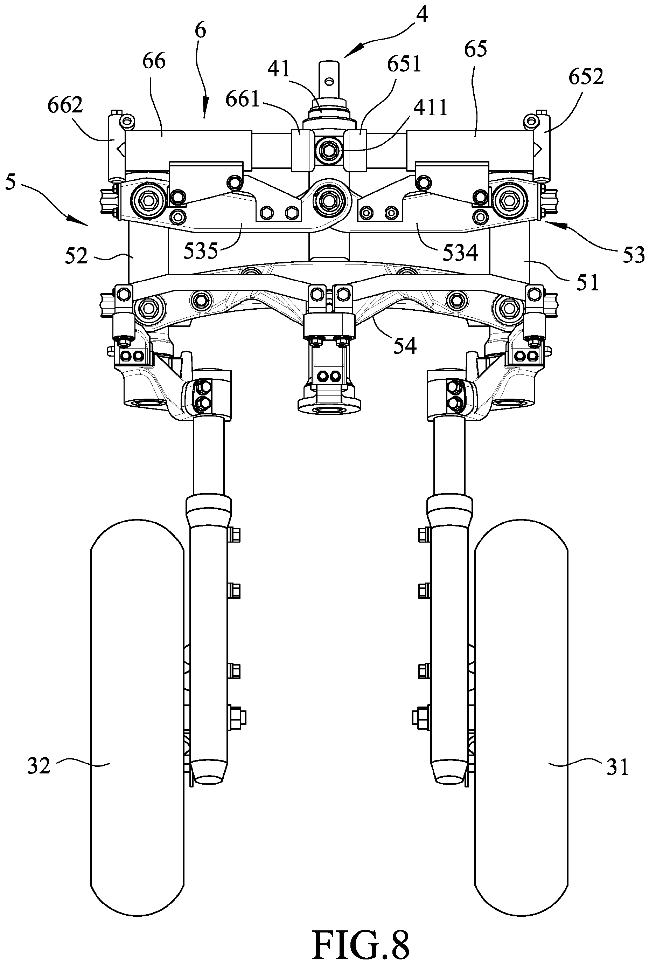

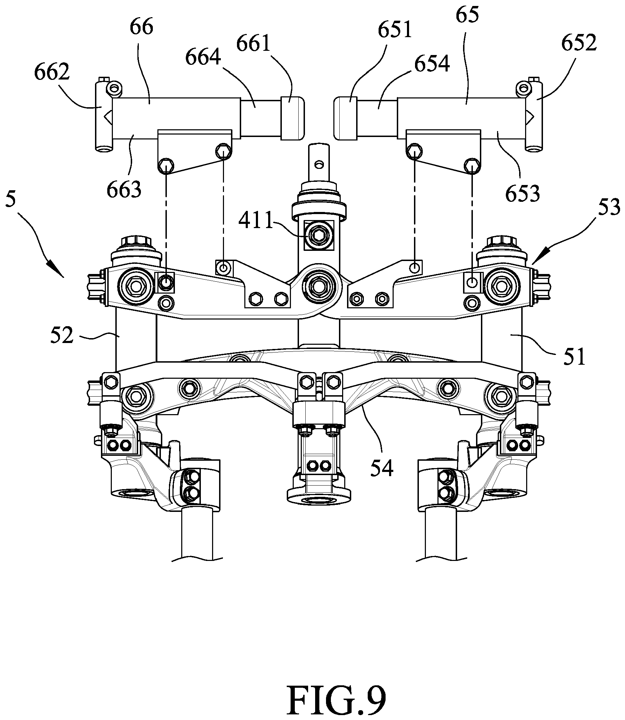

FIGS. 8 to 12 show a second embodiment of the vehicle according to the present disclosure, which has a structure modified from that of the first embodiment. In the second embodiment, the left and right hydraulic oil cylinders 61, 62 are replaced by left and right hydraulic oil cylinders 65, 66. The left hydraulic oil cylinder 65 includes a left cylinder body 653 that has a second end 652 fixedly connected to the upper connecting member 53 of the reclining unit 5, and a left oil-containing chamber 654 that retractably extends into the left cylinder body 653 for receiving a part of the hydraulic oil and that has a first end 651 opposite to the second end 652 and abuts against the fixed rod 411 of the supporting member 41. The right hydraulic oil cylinder 66 includes a right cylinder body 663 that has a second end 662 fixedly connected to the upper connecting member 53 of the reclining unit 5, and a right oil-containing chamber 664 that retractably extends into the right cylinder body 663 for receiving a part of the hydraulic oil and that has a first end 661 opposite to the second end 662 and abuts against the fixed rod 411 of the supporting member 41.

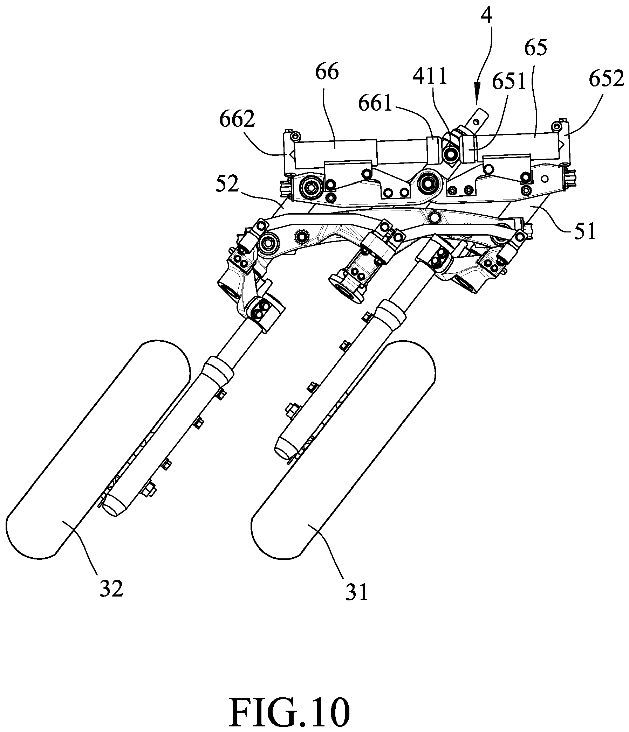

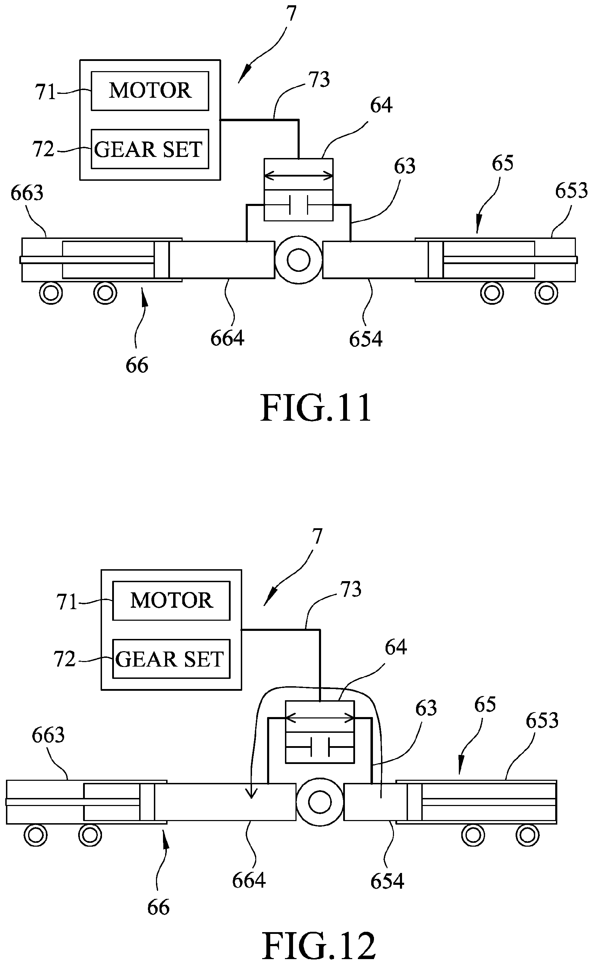

Referring to FIGS. 10 and 12, when the locking unit 6 is in the unlocking state, the rider can control the handle bar such that the tilting unit 5 is tilted. As shown in FIG. 10, the tilting unit 5 is tilted toward left, and the vehicle is turning left. During the left turn, the fixed rod 411 of the supporting member 41 presses against the first end 651 of the left hydraulic oil cylinder 65 to push the left oil-containing chamber 654 to move toward the second end 652 of the hydraulic oil cylinder 65, such that a part of the hydraulic oil is extruded from the left oil-containing chamber 654 into the right oil-containing chamber 664 to push the right oil-containing chamber 664 to move further out of the right cylinder body 663.

Referring to FIGS. 8 and 11, when the tilting unit 5 is not tilted, the amounts of hydraulic oil in the left and right oil-containing chambers 654, 664 are the same. The rider may operate the switch to change the locking unit 6 to the locking state, such that the tilting unit 5 is kept to be not tilted and the vehicle is kept in the straight direction. It is worth mentioning that, if necessary, it may be designed such that, when the tilting unit 5 is slightly tilted, the rider may still be able to operate the switch to convert the locking unit 6 into the locking state to fix the vehicle in the turning state.

A feature of claim 1 of this disclosure resides in that the symmetrical hydraulic oil cylinder configuration provides a balanced weight distribution to the vehicle. Moreover, the pivotal connection between the left and right hydraulic oil cylinders 61, 62 and the supporting member 41 provides force distribution during tilting of the vehicle, which also provides more stability to the vehicle.

A feature of claim 2 of this disclosure resides in that the other components of the vehicle is not interfered.

A feature of claim 3 of this disclosure resides in that the other components of the vehicle is not interfered.

A feature of claim 5 of this disclosure resides in that the locking unit 6 has a compact configuration.

A feature of claim 7 of this disclosure resides in that only a rather small power is needed to actuate the control valve 64, thereby eliminating the need for the motor 71 with larger power or larger gear set 72, and thereby achieving miniaturization of the locking unit 6 and the actuating unit 7.

A feature of claim 8 of this disclosure resides in that the symmetrical hydraulic oil cylinder configuration provides a balanced weight distribution to the vehicle.

A feature of claim 9 of this disclosure resides in that the symmetrical hydraulic oil cylinder configuration provides a balanced weight distribution to the vehicle. Moreover, the abutment connection between the left and right hydraulic oil cylinders 65, 66 and the supporting member 41 provides force distribution during tilting of the vehicle, which also provides more stability to the vehicle.

A feature of claim 10 of this disclosure resides in that the other components of the vehicle is not interfered.

A feature of claim 11 of this disclosure resides in that the other components of the vehicle is not interfered.

A feature of claim 14 of this disclosure resides in that only a rather small power is needed to actuate the control valve 64, thereby eliminating the need for the motor 71 with larger power or larger gear set 72, and thereby achieving miniaturization of the locking unit 6 and the actuating unit 7.

A feature of claim 15 of this disclosure resides in that the symmetrical hydraulic oil cylinder configuration provides a balanced weight distribution to the vehicle.

In the description above, for the purposes of explanation, numerous specific details have been set forth in order to provide a thorough understanding of the embodiments. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects, and that one or more features or specific details from one embodiment may be practiced together with one or more features or specific details from another embodiment, where appropriate, in the practice of the disclosure.

## Claims

1. A vehicle including:
a frame unit (4) including a supporting member (41) at a front side thereof;
a tilting unit (5) including
an upper connecting member (53) that has a first middle portion (533) pivotally connected to the supporting member (41), a first left end (531) disposed at a left end thereof, and afirst right end (532) disposed at a right end thereof,
a lower connecting member (54) that is located under the upper connecting member (53) and that has a second middle portion (534) pivotally connected to the supporting member (41), a second left end (541) disposed at a left end thereof, and a second right end (542) disposed at a right end thereof,
a left tube (51) pivotally connected to the first left end (531) of the upper connecting member (53) and the second left end (541) of the lower connecting member (54), and
a right tube (52) pivotally connected to the first right end (532) of the upper connecting member (53) and the second right end (542) of the lower connecting member (54);
a left front wheel (31) rotatably connected to the left tube (51); and
a right front wheel (32) rotatably connected to the right tube (52);
**characterized in that** said vehicle further includes
a locking unit (6) including a left hydraulic oil cylinder (61) and a right hydraulic oil cylinder (62) that are respectively located at left and right sides of the supporting member (41), said left hydraulic oil cylinder (61) having a first end (611) pivotally connected to the supporting member (41), and a second end (612) opposite to said first end (611) and pivotally connected to the tilting unit (5), said right hydraulic oil cylinder (62) having a first end (621) pivotally connected to the supporting member (41), and a second end (622) opposite to said first end (621) and pivotally connected to the tilting unit (5), and
an actuating unit (7) operable for converting said locking unit (6) between an unlocking state, where the tilting unit (5) is operable to tilt relative to the supporting member (41), and a locking state, where the tilting unit (5) is prevented from tilting relative to the supporting member (41).

2. The vehicle as claimed in claim 1, further **characterized in that** the supporting member (41) includes a fixed rod (411) at a front side thereof, said first end (611) of said left hydraulic oil cylinder (61) being pivotally connected to said fixed rod (411), said first end (621) of said right hydraulic oil cylinder (62) being pivotally connected to said fixed rod (411) .

3. The vehicle in any one of claims 1 and 2, further **characterized in that** said second end (612) of said left hydraulic oil cylinder (61) is pivotally connected to the upper connecting member (53) of the tilting unit (5), said second end (622) of said right hydraulic oil cylinder (62) being pivotally connected to the upper connecting member (53) of the tilting unit (5).

4. The vehicle in any one of claims 1 to 3, further **characterized in that** the upper connecting member (53) of the tilting unit (5) includes an upper left connecting rod (534) having the first left end (531), and an upper right connecting rod (535) having the first right end (532), said upper left and right connecting rods (534, 535) being pivotally connected to the supporting member (41) at the first middle portion (533) and being rotatable about the same axis, said left and right hydraulic oil cylinders (61, 62) being respectively located above said upper left and right connecting rods (534, 535).

5. The vehicle as claimed in claim 1, further **characterized in that** said first end (611) of said left hydraulic oil cylinder (61) and said first end (621) of said right hydraulic oil cylinder (62) are pivotally connected to the supporting member (41) and are rotatable about the same axis.

6. The vehicle in any one of claims 1 to 5, further **characterized in that** said locking unit (6) further includes an oil circuit (63) connected between said left and right hydraulic oil cylinders (61, 62) such that hydraulic oil is permitted to flow therebetween, and a control valve (64) connected to said oil circuit (63) and being operable to allow flow of the hydraulic oil in said oil circuit (63) and said left and right hydraulic oil cylinders (61, 62) such that said locking unit (6) is in the unlocking state, and being operable to prevent flow of the hydraulic oil in said oil circuit (63) and said left and right hydraulic oil cylinders (61, 62) such that said locking unit (6) is in the locking state.

7. The vehicle as claimed in claim 6, further **characterized in that** said actuating unit (7) includes a motor (71), a gear set (72) connected to said motor (71), and a transmitting line (73) that is one of a conductive wire and an oil circuit, and that is connected between said gear set (72) and said control valve (64), said motor (71) being operable to drive said gear set (72) such that said control valve (64) is driven by said gear set (72) through said transmitting line (73).

8. The vehicle as claimed in any one of claims 1 to 7, further **characterized in that** said left and right hydraulic oil cylinders (61, 62) are symmetrically disposed relative to the supporting member (41).

9. A vehicle including:
a frame unit (4) including a supporting member (41) at a front side thereof, the supporting member (41) including a fixed rod (411);
a tilting unit (5) including
an upper connecting member (53) that has a first middle portion (533) pivotally connected to the supporting member (41), a first left end (531) disposed at a left end thereof, and afirst right end (532) disposed at a right end thereof,
a lower connecting member (54) that is located under the upper connecting member (53) and that has a second middle portion (534) pivotally connected to the supporting member (41), a second left end (541) disposed at a left end thereof, and a second right end (542) disposed at a right end thereof,
a left tube (51) pivotally connected to the first left end (531) of the upper connecting member (53) and the second left end (541) of the lower connecting member (54), and
a right tube (52) pivotally connected to the first right end (532) of the upper connecting member (53) and the second right end (542) of the lower connecting member (54);
a left front wheel (31) rotatably connected to the left tube (51); and
a right front wheel (32) rotatably connected to the right tube (52);
**characterized in that** said vehicle further includes
a locking unit (6) including a left hydraulic oil cylinder (65) and a right hydraulic oil cylinder (66) that are respectively located at left and right sides of the supporting member (41), said left hydraulic oil cylinder (65) having a first end (651) abutting against the fixed rod (411) of the supporting member (41), and a second end (652) opposite to said first end (651) and connected to the tilting unit (5), said right hydraulic oil cylinder (66) having a first end (661) abutting against the fixed rod (411) of the supporting member (41), and a second end (662) opposite to said first end (661) and connected to the tilting unit (5), and
an actuating unit (7) operable for converting said locking unit (6) between an unlocking state, where the tilting unit (5) is operable to tilt relative to the supporting member (41), and a locking state, where the tilting unit (5) is prevented from tilting relative to the supporting member (41).

10. The vehicle as claimed in claim 9, further **characterized in that** the fixed rod (411) is at front side of the supporting member (41).

11. The vehicle in any one of claims 9 and 10, further **characterized in that** said second end (652) of said left hydraulic oil cylinder (65) is connected to the upper connecting member (53) of the tilting unit (5), said second end (662) of said right hydraulic oil cylinder (66) being connected to the upper connecting member (53) of the tilting unit (5).

12. The vehicle in any one of claims 9 to 11, further **characterized in that** the upper connecting member (53) of the tilting unit (5) includes an upper left connecting rod (534) having the first left end (531) and an upper right connecting rod (535) having the first right end (532), said upper left and right connecting rods (534, 535) being pivotally connected to the supporting member (41) at the first middle portion (533) and being rotatable about the same axis, said left and right hydraulic oil cylinders (65, 66) being respectively located above said upper left and right connecting rods (534, 535).

13. The vehicle in any one of claims 9 to 12, further **characterized in that** said locking unit (6) further includes an oil circuit (63) connected between said left and right hydraulic oil cylinders (65, 66) such that hydraulic oil is permitted to flow therebetween, and a control valve (64) connected to said oil circuit (63) and being operable to allow flow of the hydraulic oil in said oil circuit (63) and said left and right hydraulic oil cylinders (65, 66) such that said locking unit (6) is in the unlocking state, and being operable to prevent flow of the hydraulic oil in said oil circuit (63) and said left and right hydraulic oil cylinders (65, 66) such that said locking unit (6) is in the locking state.

14. The vehicle as claimed in claim 13, further **characterized in that** said actuating unit (7) includes a motor (71), a gear set (72) connected to said motor (71), and a transmitting line (73) that is one of a conductive wire and an oil circuit, and that is connected between said gear set (72) and said control valve (64), said motor (71) being operable to drive said gear set (72) such that said control valve (64) is driven by said gear set (72) through said transmitting line (73).

15. The vehicle as claimed in any one of claims 9 to 14, further **characterized in that** said left and right hydraulic oil cylinders (65, 66) are symmetrically disposed relative to the supporting member (41).
